# EUROPEAN PATENT APPLICATION

(11) **EP 3 614 016 A1**
(43) Date of publication of application: **26.02.2020**
(21) Application number: 18787018.3
(22) Date of filing: 18.04.2018
(51) Int. Cl.: F16F 15/04, F16F 1/40, F16F 15/02

(54) **SEISMIC ISOLATION SUPPORT DEVICE**

(30) Priority: 20.04.2017 JP 2017083783
(71) Applicant: Oiles Corporation, Tokyo 108-0075 (JP)
(72) Inventor: KOCHIYAMA, Osamu, Ashikaga-shi Tochigi 326-0327 (JP); HOSONO, Yukihiro, Tokyo 108-0075 (JP); NAGAHIRO, Kenta, Ashikaga-shi Tochigi 326-0327 (JP)
(74) Representative: J A Kemp LLP
(86) International application number: PCT/JP2018/016045
(87) International publication number: WO 2018/194107

(57) **Abstract**

A seismic base isolation support apparatus 1 includes: a cylindrical laminated body 7 having, in addition to alternately laminated elastic layers 2 and rigid layers 3, a cylindrical coating layer 6 coating cylindrical outer peripheral surfaces 4 and 5 of the elastic layers 2 and the rigid layers 3; an upper plate 10 and a lower plate 11 mounted respectively on an annular upper end face 8 and an annular lower end face 9 in a laminated direction V of the laminated body 7; and a lead plug 17 which serves as a vibration damping body and is disposed in a hollow portion 14 surrounded by the elastic layers 2 and the rigid layers 3 and by the upper plate 10 and the lower plate 11 and extending in the laminated direction V from a lower surface 12 of the upper plate 10 to an upper surface 13 of the lower plate 11, the lead plug 17 being disposed therein without clearances with respect to inner peripheral surfaces 15 of the elastic layers 2, cylindrical inner peripheral surfaces 16 of the rigid layers 3, the lower surface 12 of the upper plate 10, and the upper surface 13 of the lower plate 11.

## Description

### TECHNICAL FIELD

The present invention relates to an apparatus for reducing vibration acceleration applied to a structure by being disposed between two structures and by absorbing relative horizontal vibrational energy between the two structures, specifically to a seismic base isolation support apparatus for preventing damage to a structure such as a building, a bridge, and the like by reducing seismic input acceleration by attenuating seismic energy.

### BACKGROUND ART

A seismic base isolation support apparatus is known which is comprised of a laminated body having alternately laminated elastic layers and rigid layers and a hollow portion defined by inner peripheral surfaces of these elastic layers and rigid layers, as well as a lead plug disposed in the hollow portion of this laminated body.

Such a seismic base isolation support apparatus, while supporting the vertical load of a structure through the laminated body and the lead plug, is adapted to attenuate through the plastic deformation (shear deformation) of the lead plug the vibration in the horizontal direction of the structure with respect to one end in a laminated direction of the laminated body attributable to an earthquake, and also to suppress through the elastic deformation (shear deformation) of the laminated body the transmission, to the structure, of the vibration in the horizontal direction of the one end in the laminated direction of the laminated body ascribable to the earthquake.

### PRIOR ART DOCUMENTS

### PATENT DOCUMENTS

[Patent Document 1] JP-A-9-105441
[Patent Document 2] JP-A-2009-8181
[Patent Document 3] JP-A-2013-217483

### SUMMARY OF THE INVENTION

### PROBLEMS THAT THE INVENTION IS TO SOLVE

Incidentally, with this type of seismic base isolation support apparatus, lead is press-fitted and filled into the hollow portion of the laminated body to obtain a lead plug, and the press-fitted and filled lead plug surrounded by inner peripheral surfaces of rigid layers and elastic layers of the laminated body is partially pushed back by the resiliency of the elastic layers. And, internal pressure is generated in the lead plug owing to this pushing back.

If the generated internal pressure of the lead plug is not sufficient in relation to the rigidity of the elastic layers, for instance in the seismic isolation operation of the seismic base isolation support apparatus, clearances can occur between the outer peripheral surface of the lead plug and the inner peripheral surfaces of the rigid layers and the elastic layers, so that there occurs a possibility that it becomes impossible to effectively attenuate vibrations by the lead plug.

Such a problem occurs noticeably with the lead plug, but can also occur with not only such a lead plug but a vibration damping body constituted of a damping material such as lead, tin, or a non-lead-based low melting point alloy which absorbs vibrational energy through plastic deformation.

The present invention has been devised in view of the above-described aspects, and its object is to provide a seismic base isolation support apparatus which, as compared with a conventional seismic base isolation support apparatus, allows the vibration damping body disposed in the hollow portion of the laminated body to be restrained with lesser clearances, thereby making it possible to obtain more stable seismic isolation characteristics and avoid the fatigue and fracture of the elastic layers of the laminated body and the vibration damping body, and which is more excellent in durability, seismic isolation effect, and manufacturability.

### MEANS FOR SOLVING THE PROBLEMS

A seismic base isolation support apparatus in accordance with the present invention comprises: a laminated body having alternately laminated elastic layers and rigid layers; an upper plate and a lower plate which are respectively mounted on an upper end face and a lower end face of the laminated body; and a vibration damping body which is disposed in a hollow portion surrounded by the elastic layers and the rigid layers as well as the upper plate and the lower plate and extending in a laminated direction from a lower surface of the upper plate to an upper surface of the lower plate, the laminated body and the vibration damping body being adapted to support a load applied in the laminated direction to the upper plate, wherein the vibration damping body is disposed in the hollow portion such that a ratio Pr/PO between surface pressure Pr from the vibration damping body to the upper plate on the basis of the load in the laminated direction to be supported and surface pressure P0 at a pressure receiving surface of the laminated body with respect to the load on the basis of that load becomes equal to or greater than 1.00 (ratio Pr/P0 ≥ 1.00), and such that a ratio Vp/Ve between a volume Vp of the vibration damping body disposed in the hollow portion and a volumetric capacity Ve of the hollow portion in a state in which the vibration damping body is not yet disposed therein and the load in the laminated direction is applied to the laminated body becomes equal to or greater than 1.02 (ratio Vp/Ve ≥ 1.02).

Further, a seismic base isolation support apparatus in accordance with the present invention comprises: a laminated body having alternately laminated elastic layers and rigid layers; an upper plate and a lower plate which are respectively mounted on an upper end face and a lower end face of the laminated body; and a vibration damping body which is disposed in a hollow portion surrounded by the elastic layers and the rigid layers as well as the upper plate and the lower plate and extending in a laminated direction from a lower surface of the upper plate to an upper surface of the lower plate, the vibration damping body being disposed without a clearance with respect to the elastic layers and the rigid layers as well as the upper plate and the lower plate, the laminated body and the vibration damping body being adapted to support a load applied in the laminated direction to the upper plate, wherein the vibration damping body is disposed in the hollow portion such that a ratio Pr/PO between surface pressure Pr from the vibration damping body to the upper plate on the basis of the load in the laminated direction to be supported and surface pressure P0 at a pressure receiving surface of the laminated body with respect to the load on the basis of that load becomes equal to or greater than 1.00 (ratio Pr/P0 ≥ 1.00), and such that a ratio Vp/Ve between a volume Vp of the vibration damping body disposed in the hollow portion and a volumetric capacity Ve of the hollow portion in a state in which the vibration damping body is not yet disposed therein and the load in the laminated direction is applied to the laminated body becomes equal to or greater than 1.02 (ratio Vp/Ve ≥ 1.02).

Furthermore, a seismic base isolation support apparatus in accordance with the present invention comprises: a laminated body having alternately laminated elastic layers and rigid layers; an upper plate and a lower plate which are respectively mounted on an upper end face and a lower end face of the laminated body; and a vibration damping body which is disposed in a hollow portion surrounded by the elastic layers and the rigid layers as well as the upper plate and the lower plate and extending in a laminated direction from a lower surface of the upper plate to an upper surface of the lower plate, the laminated body and the vibration damping body being adapted to support a load applied in the laminated direction to the upper plate, the vibration of the upper plate with respect to the lower plate in a direction perpendicular to the laminated direction being attenuated through the plastic deformation of the vibration damping body, the transmission of the vibration of the lower plate to the upper plate in the direction perpendicular to the laminated direction being suppressed through the shear elastic deformation of the laminated body, wherein the vibration damping body is disposed in the hollow portion such that a ratio Pr/PO between surface pressure Pr from the vibration damping body to the upper plate on the basis of the load in the laminated direction to be supported and surface pressure P0 at a pressure receiving surface of the laminated body with respect to the load on the basis of that load becomes equal to or greater than 1.00 (ratio Pr/P0 ≥ 1.00), and such that a ratio Vp/Ve between a volume Vp of the vibration damping body disposed in the hollow portion and a volumetric capacity Ve of the hollow portion in a state in which the vibration damping body is not yet disposed therein and the load in the laminated direction is applied to the laminated body becomes equal to or greater than 1.02 (ratio Vp/Ve ≥ 1.02).

In addition, a seismic base isolation support apparatus in accordance with the present invention comprises: a laminated body having alternately laminated elastic layers and rigid layers; an upper plate and a lower plate which are respectively mounted on an upper end face and a lower end face of the laminated body; and a vibration damping body which is disposed in a hollow portion surrounded by the elastic layers and the rigid layers as well as the upper plate and the lower plate and extending in a laminated direction from a lower surface of the upper plate to an upper surface of the lower plate, the vibration damping body being disposed without a clearance with respect to the elastic layers and the rigid layers as well as the upper plate and the lower plate, the laminated body and the vibration damping body being adapted to support a load applied in the laminated direction to the upper plate, the vibration of the upper plate with respect to the lower plate in a direction perpendicular to the laminated direction being attenuated through the plastic deformation of the vibration damping body, the transmission of the vibration of the lower plate to the upper plate in the direction perpendicular to the laminated direction being suppressed through the shear elastic deformation of the laminated body, wherein the vibration damping body is disposed in the hollow portion such that a ratio Pr/PO between surface pressure Pr from the vibration damping body to the upper plate on the basis of the load in the laminated direction to be supported and surface pressure P0 at a pressure receiving surface of the laminated body with respect to the load on the basis of that load becomes equal to or greater than 1.00 (ratio Pr/P0 ≥ 1.00), and such that a ratio Vp/Ve between a volume Vp of the vibration damping body disposed in the hollow portion and a volumetric capacity Ve of the hollow portion in a state in which the vibration damping body is not yet disposed therein and the load in the laminated direction is applied to the laminated body becomes equal to or greater than 1.02 (ratio Vp/Ve ≥ 1.02).

If the elastic layers are compressed in the laminated direction (vertical direction) by the load (vertical load) applied from the supported structure to the upper plate, and the height (length in the laminated direction) of the hollow portion becomes low (short), the vibration damping body presses the inner peripheral surface of the elastic layers, and partially jut out into the elastic layers in a direction perpendicular to the laminated direction (horizontal direction, i.e., shearing direction). The present invention has been devised on the basis of a finding that the vibration damping body can be restrained with lesser clearances with respect to the laminated body and durability, seismic isolation effect, and manufacturability are particularly excellent in the seismic base isolation support apparatus in which the vibration damping body is disposed in the hollow portion such that a ratio Pr/PO between, on the one hand, surface pressure Pr from the vibration damping body to the upper plate, i.e., internal pressure generated in the vibration damping body on the basis of this jutting out, i.e., on the basis of a resilient reaction force of the elastic layers ascribable to the pressing of the inner peripheral surfaces of the elastic layers by the vibration damping body and, on the other hand, surface pressure P0 at a pressure receiving surface of the laminated body with respect to the load on the basis of that load, as well as a ratio Vp/Ve between a volume Vp of the vibration damping body disposed in the hollow portion and a volumetric capacity Ve of the hollow portion in a state in which the vibration damping body is not yet disposed therein and the load in the laminated direction is applied to the laminated body (hereinafter, this hollow portion will be referred to as the reduced hollow portion), assume fixed relationships, respectively.

In the seismic base isolation support apparatus of the present invention based on such a finding, the vibration damping body disposed in the hollow portion can be restrained with lesser clearances by the elastic layers and the rigid layers as well as the upper plate and the lower plate if the vibration damping body is disposed such that the ratio Pr/PO becomes equal to or greater than 1.00 (ratio Pr/P0 ≥ 1.00), preferably exceeds 1.00 (ratio Pr/P0 > 1.00), or more preferably becomes equal to or greater than 1.09 (ratio Pr/P0 ≥ 1.09), still more preferably equal to or greater than 2.02 (ratio Pr/P0 ≥ 2.02), or most preferably equal to or greater than 2.50 (ratio Pr/P0 ≥ 2.50), and such that the ratio Vp/Ve becomes equal to or greater than 1.02 (ratio Vp/Ve ≥ 1.02), preferably not greater than 1.07 (ratio Pr/P0 ≤ 1.07), even in the shear elastic deformation of the laminated body in the direction perpendicular to the laminated direction, as compared with the case where the vibration damping body is disposed in the hollow portion such that the ratio Pr/PO becomes smaller than 1.00, while the ratio Vp/Ve becomes equal to or greater than 1.02, or such that the ratio Vp/Ve becomes smaller than 1.02, while the ratio Pr/PO becomes equal to or greater than 1.00. As a result, it is possible to provide a seismic base isolation support apparatus which makes it possible to obtain more stable seismic isolation characteristics, is capable of avoiding more effectively the fatigue and fracture of the elastic layers and the vibration damping body, and excels more in durability, seismic isolation effect, and manufacturability.

The volumetric capacity Ve of the reduced hollow portion increases or decreases depending on the load of the elastic layers and the rigid layers, i.e., the vertical load applied to the laminated body, in other words, the load of the structure supported by the seismic base isolation support apparatus, and is different from the volumetric capacity of the hollow portion in the state in which the vibration damping body with a volume exceeding 1.00 times the volumetric capacity Ve of the reduced hollow portion is disposed.

Incidentally, in the case where the vibration damping body is disposed in the hollow portion such that the ratio Pr/PO becomes smaller than 1.00 (ratio Pr/PO < 1.00), and the ratio Vp/Ve becomes smaller than 1.02 (Vp/Ve < 1.02), clearances are more likely to occur between, on the one hand, the elastic layers and the rigid layers as well as the upper plate and the lower plate defining the hollow portion and, on the other hand, the outer peripheral surface of the vibration damping body which is contiguous thereto, as compared with the case where the vibration damping body is disposed in the hollow portion such that the ratio Pr/PO becomes smaller than 1.00, while the ratio Vp/Ve becomes equal to or greater than 1.02, or such that the ratio Vp/Ve becomes smaller than 1.02, while the ratio Pr/PO becomes equal to or greater than 1.00. Therefore, during the operation of the seismic base isolation support apparatus, i.e., while lateral force is repeatedly applied to the seismic base isolation support apparatus, clearances easily occur between the inner peripheral surface of the laminated body and the outer peripheral surface of the vibration damping body, so that unstable seismic isolation characteristics are exhibited. This is presumably because the vibration damping body is not restrained by the laminated body without a clearance at least in the shearing direction (horizontal direction), and deformation other than shear deformation occurs in the vibration damping body.

On the other hand, in a case where the vibration damping body is disposed in an amount greater than 1.12 times the volumetric capacity Ve of the reduced hollow portion, or the ratio Pr/PO is greater than 5.90 (ratio Pr/PO > 5.90), the vibration damping body largely bites into the elastic layers, and the inner peripheral surface of the laminated body at the elastic layers become excessively concave, so that the shear stress between the elastic layer and the rigid layer in the vicinity of such a position becomes excessively large. In the state in which the shear stress thus occurs excessively, the deterioration of the elastic layers is accelerated, resulting in the deterioration of the durability thereof. In addition, it also became known that, to manufacture a seismic base isolation support apparatus in which the vibration damping body is press-fitted in an amount 1.12 times the volumetric capacity of the reduced hollow portion or in which the ratio Pr/PO is greater than 5.90, the press-fitting force of the vibration damping body into the hollow portion must be made extremely large, and there is a possibility of damaging the elastic layers of the laminated body due to the press-fitting, making the manufacture of the seismic base isolation support apparatus difficult.

In the present invention, in a preferred embodiment, the vibration damping body is formed of a damping material which absorbs vibrational energy through plastic deformation, and such a damping material may be constituted of lead, tin, or a non-lead-based low melting point alloy (e.g., a tin-containing alloy selected from a tin-zinc-based alloy, a tin-bismuth-based alloy, and a tin-indium-based alloy; specifically, such as a tin-bismuth alloy containing 42 to 43 wt.% of tin and 57 to 58 wt.% of bismuth).

In the present invention, with regards to the upper plate and an uppermost rigid layer in the laminated direction, in a preferred embodiment, the upper plate includes an upper flange plate having an upper through hole and an upper closure plate secured to the upper flange plate in this upper through hole. The upper end face in the laminated direction of the vibration damping body is in contact with the lower end face in the laminated direction of the upper closure plate without a clearance, and the outer peripheral surface of the upper end portion in the laminated direction of the vibration damping body is in contact, without a clearance, with the inner peripheral surface of the upper flange plate defining the upper through hole. In another preferred embodiment, the uppermost rigid layer in the laminated direction has a first recess which is open at an upper surface thereof and which has a diameter greater than a diameter of an upper portion of the hollow portion in the laminated direction and communicates with the upper portion of the hollow portion, and the upper plate includes an upper flange plate having a second recess which is open in a lower surface thereof, has a diameter identical to the diameter of the first recess, and opposes the first recess in the laminated direction and an upper shear key which is fittingly secured to the upper flange plate in the second recess and is fittingly secured to the uppermost rigid layer in the first recess, an outer peripheral surface of an upper end portion in the laminated direction of the vibration damping body being in contact, without a clearance, with an inner peripheral surface of the uppermost rigid layer defining the upper portion of the hollow portion.

In the present invention, with regards to the lower plate and a lowermost rigid layer in the laminated direction, in a preferred embodiment, a lower plate includes a lower flange plate having a lower through hole and a lower closure plate secured to the lower flange plate in this lower through hole. The lower end face in the laminated direction of the vibration damping body is in contact with the upper end face in the laminated direction of the lower closure plate without a clearance, and the outer peripheral surface of the lower end portion in the laminated direction of the vibration damping body is in contact, without a clearance, with the inner peripheral surface of the lower flange plate defining the lower through hole. In another preferred embodiment, the lowermost rigid layer in the laminated direction has a third recess which is open at a lower surface thereof and which has a diameter greater than a diameter of a lower portion of the hollow portion in the laminated direction and communicates with the lower portion of the hollow portion, and the lower plate includes a lower flange plate having a fourth recess which is open in an upper surface thereof, has a diameter identical to the diameter of the third recess, and opposes the third recess in the laminated direction and a lower shear key which is fittingly secured to the lower flange plate in the fourth recess and is fittingly secured to the lowermost rigid layer in the third recess, an outer peripheral surface of a lower end portion in the laminated direction of the vibration damping body being in contact, without a clearance, with an inner peripheral surface of the lowermost rigid layer defining the lower portion of the hollow portion.

As for the upper flange plate and the lower flange plate, their outer edges may be circular or elliptical, or may alternatively be rectangular or square.

In the present invention, as the material of the elastic layer, it is possible to cite such as natural rubber, silicone rubber, highly damping rubber, urethane rubber, chloroprene rubber or the like, but natural rubber is preferable. Each of the elastic layers preferably has a thickness of 1 mm to 30 mm or thereabouts in a no-load state (in a state in which the load in the laminated direction to be supported is not being applied to the upper plate), but the invention is not limited to the same. In addition, as the material of the rigid layer, it is possible to cite a steel plate, a fiber-reinforced synthetic resin plate using a carbon fiber, a glass fiber, an aramid fiber, or the like, a fiber-reinforced hard rubber plate, and the like. Each of the rigid layers may have a thickness of 1 mm to 6 mm or thereabouts, and the uppermost and lowermost rigid layers may have a thickness of 10 mm to 50 mm or thereabouts, but the invention is not limited to the same. In addition, the elastic layers and the rigid layers in terms of their numbers are not particularly limited, and the materials and the numbers of the elastic layers and the rigid layers may be determined to obtain stable seismic isolation characteristics from the viewpoints of the load of the structure to be supported, the amount of shear deformation (amount of horizontal strain), the modulus of elasticity of the elastic layers, the estimated magnitudes of vibration acceleration and vibration period applied to the structure.

In addition, in the present invention, the elastic body and the vibration damping body are preferably an annular body and a cylindrical body, respectively, but may have another shape, such as an elliptical or square shape and an elliptical or square shape, respectively. The hollow portion may be singular, but the seismic base isolation support apparatus may alternatively have a plurality of hollow portions, and the seismic base isolation support apparatus may be constructed by disposing vibration damping bodies in the respective hollow portions. It should be noted that, with respect to each of these hollow portions, the ratio Pr/PO and the ratio Vp/Ve need not be identical, and the ratio Pr/PO and the ratio Vp/Ve may be respectively different. In addition, the ratio Pr/PO and the ratio Vp/Ve are preferably equal to or greater than 1.00 and 1.02, respectively, with respect to each of these hollow portions, as described above, but the ratio Pr/PO and the ratio Vp/Ve may be equal to or greater than 1.00 and 1.02, respectively, with respect to only some of the plurality of hollow portions.

In a preferred embodiment of the present invention, the rigid layers include a pair of thick-walled rigid plates respectively disposed at respective end face sides of the laminated body, and one end portion of the vibration damping body is densely disposed in one end portion of the hollow portion defined by an inner peripheral surface of one of the thick-walled rigid plates, while another end portion of the vibration damping body is densely disposed in another end portion of the hollow portion defined by an inner peripheral surface of another one of the thick-walled rigid plates.

### ADVANTAGES OF THE INVENTION

According to the present invention, it is possible to provide a seismic base isolation support apparatus which allows the vibration damping body disposed in the hollow portion of the laminated body to be restrained without a clearance as prescribed, thereby making it possible to obtain stable seismic isolation characteristics and avoid the fatigue and fracture of the elastic layers of the laminated body and the vibration damping body, and which excels particularly in durability, seismic isolation effect, and manufacturability.

### BRIEF DESCRIPTION OF THE DRAWINGS

Fig. 1 is an explanatory cross-sectional view, taken in the direction of arrows along line I - I shown in Fig. 2, of a preferred embodiment for carrying out the invention;
Fig. 2 is an explanatory partially cross-sectional view of the embodiment shown in Fig. 1;
Fig. 3 is an explanatory partially enlarged cross-sectional view of the embodiment shown in Fig. 1;
Fig. 4 is an explanatory diagram of test results on hysteresis characteristics between horizontal displacement and horizontal stress in preferred Example 1 of the present invention;
Fig. 5 is an explanatory diagram of test results on hysteresis characteristics between horizontal displacement and horizontal stress in preferred Example 2 of the present invention;
Fig. 6 is an explanatory diagram of test results on hysteresis characteristics between horizontal displacement and horizontal stress in preferred Example 3 of the present invention;
Fig. 7 is an explanatory diagram of test results on hysteresis characteristics between horizontal displacement and horizontal stress in Comparative Example 1; and
Fig. 8 is an explanatory diagram of test results on hysteresis characteristics between horizontal displacement and horizontal stress in Comparative Example 2.

### MODE FOR CARRYING OUT THE INVENTION

Hereafter, a description will be given of the present invention and the mode for carrying it out on the basis of preferred embodiments illustrated in the drawings. It should be noted that the present invention is not limited to these embodiments.

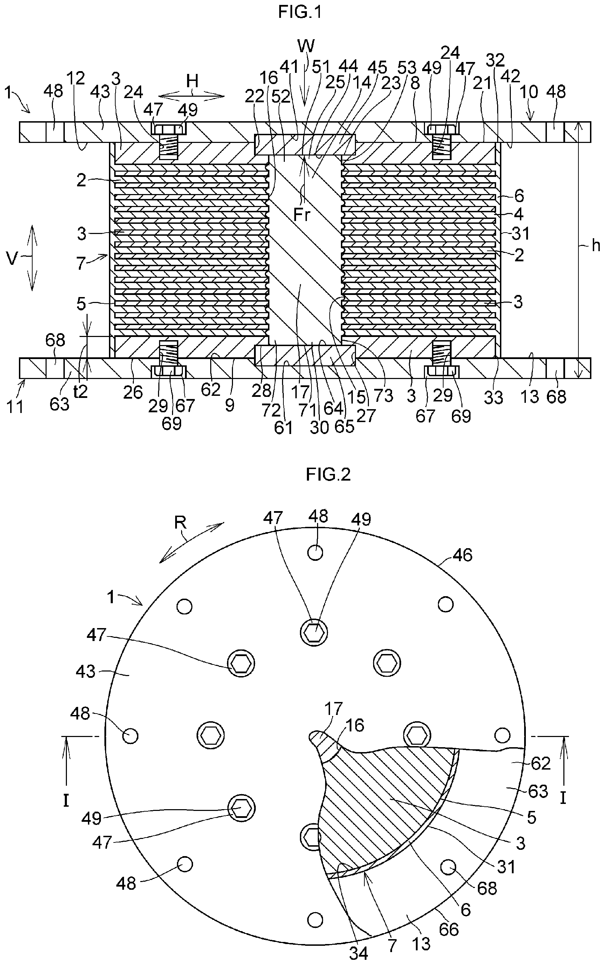

A seismic base isolation support apparatus 1 of this embodiment shown in Figs. 1 to 3 is comprised of a cylindrical laminated body 7 including, in addition to pluralities of alternately laminated elastic layers 2 and rigid layers 3, a cylindrical coating layer 6 coating cylindrical outer peripheral surfaces 4 and 5 of the elastic layers 2 and the rigid layers 3; an upper plate 10 and a lower plate 11 which are respectively mounted on an annular upper end face 8 and an annular lower end face 9 in a laminated direction (in this embodiment, also a vertical direction) V of the laminated body 7; and a lead plug 17 serving as a vibration damping body disposed in a hollow portion 14 which is surrounded by the elastic layers 2 and the rigid layers 3 and by the upper plate 10 and the lower plate 11 and extends in the laminated direction V from a lower surface 12 of the upper plate 10 to an upper surface 13 of the lower plate 11, the lead plug 17 being disposed therein without clearances with respect to inner peripheral surfaces 15 of the elastic layers 2, cylindrical inner peripheral surfaces 16 of the rigid layers 3, the lower surface 12 of the upper plate 10, and the upper surface 13 of the lower plate 11.

Each of the elastic layers 2, which is constituted of an annular rubber plate made of natural rubber with a thickness of t1 = 2.5 mm, is vulcanization bonded to the upper surface and the lower surface in the laminated direction V of the rigid layers 3 opposed thereto in the laminated direction V.

Among the rigid layers 3, each of the uppermost and lowermost rigid layers 3 in the laminated direction V is formed of a mutually identical annular steel plate with a thickness of t2 = 20 mm. The uppermost rigid layer 3 has a recess 23 which is open at an upper surface 21 thereof and is defined by a cylindrical inner peripheral surface 22, as well as a plurality of threaded holes 24 which are similarly open at the upper surface 21 and are arranged at equiangular intervals in a circumferential direction R. The recess 23, which is defined by the inner peripheral surface 22 having a greater diameter than a diameter of the inner peripheral surface 16 of the uppermost rigid layer 3 defining an upper portion 25 of the hollow portion 14 in the laminated direction V, communicates with the upper portion 25 of that hollow portion 14. The lowermost rigid layer 3 has a recess 28 which is open at a lower surface 26 thereof and is defined by a cylindrical inner peripheral surface 27 with the same diameter as the inner peripheral surface 22, as well as a plurality of threaded holes 29 which are similarly open at the lower surface 26 and are arranged at equiangular intervals in the circumferential direction R. The recess 28, which is defined by the inner peripheral surface 27 having a greater diameter than the diameter of the inner peripheral surface 16 of the lowermost rigid layer 3 defining a lower portion 30 of the hollow portion 14 in the laminated direction V, communicates with the lower portion 30 of that hollow portion 14. Each of the rigid layers 3 disposed between the uppermost rigid layer 3 and the lowermost rigid layer 3 in the laminated direction V is formed of a mutually identical annular steel plate with a thickness of t3 = 1.6 mm which is thinner than the uppermost and lowermost rigid layers 3.

The coating layer 6 has a thickness of 5 mm or thereabouts, is formed of the same natural rubber as the elastic layers 2, and has a cylindrical outer peripheral surface 31, an annular upper end face 32, and an annular lower end face 33. This coating layer 6 is vulcanization bonded to the outer peripheral surfaces 4 and 5 at a cylindrical inner peripheral surface 34 thereof.

The upper plate 10 has a disk-shaped upper flange plate 43 having at a lower surface 42 thereof a recess 41 opposed to the recess 23 in the laminated direction V with the same diameter as a diameter of the recess 23, as well as an upper shear key 45 which is fittingly secured to the upper flange plate 43 at the recess 41, is fittingly secured to the uppermost rigid layer 3 at the recess 23, and has a circular lower surface 44. The upper flange plate 43 having a cylindrical outer peripheral surface 46 has, in addition to the recess 41, a plurality of through holes 47 arranged at equiangular intervals in the circumferential direction R in correspondence with the plurality of threaded holes 24 in the laminated direction V and a plurality of through holes 48 arranged at equiangular intervals in the circumferential direction R in the vicinities of the outer peripheral surface 46. The upper flange plate 43 is fixed to the uppermost rigid layer 3 by means of bolts 49 which are inserted in the respective through holes 47 and are threadedly engaged with the uppermost rigid layer 3 in the respective threaded holes 24, while the upper flange plate 43 is adapted to be fixed to a supported superstructure by means of anchor bolts inserted in the through holes 48.

Thus, the lower surface 12 of the upper plate 10 having both the upper flange plate 43 and the upper shear key 45 is constituted by the lower surface 42 and the lower surface 44. The upper end face 8 constituted by both the upper surface 21 and the upper end face 32 is in contact with the lower surface 42 at the lower surface 12 without a clearance, and the lead plug 17 at its circular upper end face 51 is in contact with the lower surface 44 at the lower surface 12 without a clearance, while an outer peripheral surface 53 of an upper end portion 52 in the laminated direction V of the lead plug 17 disposed in the upper portion 25 is in contact with the inner peripheral surface 16 of the uppermost rigid layer 3 without a clearance.

The lower plate 11 has a disk-shaped lower flange plate 63 having at an upper surface 62 thereof a recess 61 opposed to the recess 28 in the laminated direction V with the same diameter as a diameter of the recess 28, as well as a lower shear key 65 which is fittingly secured to the lower flange plate 63 at the recess 61, is fittingly secured to the lowermost rigid layer 3 at the recess 28, and has a circular upper surface 64. The lower flange plate 63 having a cylindrical outer peripheral surface 66 has, in addition to the recess 61, a plurality of through holes 67 arranged at equiangular intervals in the circumferential direction R in correspondence with the plurality of threaded holes 29 in the laminated direction V and a plurality of through holes 68 arranged at equiangular intervals in the circumferential direction R in the vicinities of the outer peripheral surface 66. The lower flange plate 63 is fixed to the lowermost rigid layer 3 by means of bolts 69 which are inserted in the respective through holes 67 and are threadedly engaged with the lowermost rigid layer 3 in the respective threaded holes 29, while the lower flange plate 63 is adapted to be fixed to a substructure to be mounted thereon, by means of anchor bolts inserted in the through holes 68.

Thus, the upper surface 13 of the lower plate 11 having both the lower flange plate 63 and the lower shear key 65 is constituted by the upper surface 62 and the upper surface 64. The lower end face 9 constituted by both the lower surface 26 and the lower end face 33 is in contact with the upper surface 62 at the upper surface 13 without a clearance, and the lead plug 17 at its circular lower end face 71 is in contact with the upper surface 64 at the upper surface 13 without a clearance, while an outer peripheral surface 73 of a lower end portion 72 in the laminated direction V of the lead plug 17 disposed in the lower portion 30 is in contact with the inner peripheral surface 16 of the lowermost rigid layer 3 without a clearance.

The lead plug 17, which is formed of lead serving as a damping material for absorbing vibrational energy through plastic deformation and having a purity of 99.9% or higher, is press-fitted and filled in the hollow portion 14 defined by the lower surface 44, the inner peripheral surfaces 15 and 16, and the upper surface 64. Through such fitting and filling, even in a state (no-load state) in which a load W in the laminated direction V from the supported superstructure is not being applied to the upper plate 10, the lead plug 17 is disposed without a clearance with respect to the lower surface 44, the outer peripheral surfaces 4 and 5, and the upper surface 64, and slightly bites into the elastic layers 2 by jutting out toward the elastic layers 2 in a horizontal direction (shearing direction) H against the resiliency of the elastic layers 2 to thereby form the inner peripheral surfaces 15 of the elastic layers 2 into concave surfaces 81, with the result that an inner peripheral surface 82 of the laminated body 7, which is constituted by the inner peripheral surfaces 15 and 16, is formed into the concave surfaces 81 at the positions of the inner peripheral surfaces 15 of those elastic layers 2 and into convex surfaces 83 at the positions of the rigid layers 3. In a state (loaded state) in which the load W in the laminated direction V from the supported superstructure is being applied to the upper plate 10, the elastic layers 2 are compressed in the laminated direction V, so that the thickness t1 of the elastic layer 2 becomes smaller than 2.5 mm, and the height h of the seismic base isolation support apparatus 1 becomes lower. As a result, the lead plug 17 press-fitted and filled into the hollow portion 14 further bites into the elastic layers 2 by jutting out toward the elastic layers 2 in the horizontal direction H against the resiliency of the elastic layers 2 to thereby form the inner peripheral surfaces 15 of the elastic layers 2 into the concave surfaces 81 which are more concaved in the horizontal direction (shearing direction) H.

The lead plug 17 is densely disposed in the hollow portion 14 such that a ratio Pr/PO between, on the one hand, surface pressure Pr (= Fr/Sr (area of the upper end face 51 of the lead plug 17): N/m², where N is newton; hereinafter the same) caused by a reaction force (a force directed upwardly in the laminated direction V) Fr from the lead plug 17 to the upper shear key 45 of the upper plate 10 in a state in which a load (a force directed downwardly in the laminated direction V) W in the laminated direction V from the supported superstructure is applied to the upper plate 10 and, on the other hand, surface pressure P0 (= W/S0 (pressure receiving area of the laminated body 7 with respect to the load W): N/m²) at the pressure receiving surface of the laminated body 7 due to that load W, becomes equal to or greater than 1.00, and such that a ratio Vp/Ve between a volume Vp of the lead plug 17 and a volumetric capacity Ve of the hollow portion 14 in a state in which the lead plug 17 is not yet disposed therein and the load W in the laminated direction V is applied to the laminated body 7 becomes equal to or greater than 1.02.

The above-described seismic base isolation support apparatus 1 is disposed between the substructure and the superstructure with the lower flange plate 63 affixed to the substructure by means of the anchor bolts inserted in the through holes 68 and with the upper flange plate 43 affixed to the superstructure by means of the anchor bolts inserted in the through holes 48. Upon receiving the weight W of the superstructure, the seismic base isolation support apparatus 1 is adapted to support through the laminated body 7 and the lead plug 17 the load W in the laminated direction V applied to the upper plate 10, attenuate through the plastic deformation of the lead plug 17 the vibration in the horizontal direction H of the upper plate 10 with respect to the lower plate 11, and suppress through the shear elastic deformation in the horizontal direction H of the laminated body 7 the transmission of the vibration in the horizontal direction H of the lower plate 11 to the upper plate 10.

In manufacturing the seismic base isolation support apparatus 1, first, a plurality of annular rubber plates with a thickness t1 = 2.5 mm, serving as the elastic layers 2, and a plurality of annular steel plates with a thickness t3 = 1.6 mm, serving as the rigid layers 3 between the uppermost and lowermost rigid layers 3, are alternately laminated, and a pair of annular steel plates with a thickness t2 = 20 mm, serving as the uppermost and lowermost rigid layers 3, are respectively disposed on the lower surface and the upper surface of the laminated assembly thereof. These members are mutually fixed to each other through such as vulcanization bonding under pressure in a mold to thereby form the laminated body 7. Subsequently, the lower plate 11 constituted by both the lower shear key 65 and the lower flange plate 63 is affixed to the lowermost rigid layer 3 through the bolts 69. Next, a measurement is made of the volumetric capacity Ve of the hollow portion 14 in the state in which the lead plug 17 is not yet disposed therein and the load W in the laminated direction V is applied to the laminated body 7. After this measurement, lead having the volume Vp of 1.02 × Ve or greater and a purity of 99.9% or higher is press-fitted into the hollow portion 14 in order to form the lead plug 17 in the hollow portion 14. The press-fitting of lead is effected by pressing lead into the hollow portion 14 by means of a hydraulic ram or the like so that the lead plug 17 is restrained without a clearance in the hollow portion 14 by the laminated body 7. After the press-fitting of lead, the upper plate 10 constituted by both the upper flange plate 43 and the upper shear key 45 is affixed to the uppermost rigid layer 3 through the bolts 49. It should be noted that in the formation of the laminated body 7 by vulcanization bonding under pressure in the mold, a rubber sheet serving as the coating layer 6 may be wound around the outer peripheral surfaces 4 and 5 of the elastic layers 2 and the rigid layers 3 in such a manner as to cover the outer peripheral surfaces 4 and 5, and the coating layer 6 vulcanization bonded to the outer peripheral surfaces 4 and 5 of the elastic layers 2 and the rigid layers 3 may be formed simultaneously with the vulcanization bonding. In addition, in such formation, parts on the inner peripheral side of the rubber plates serving as the elastic layers 2 may flow and cover the inner peripheral surfaces 16 of the rigid layers 3 to thereby form a coating layer which is sufficiently thinner than the 2 mm thickness of the coating layer 6.

To confirm that, in the manufactured seismic base isolation support apparatus 1, the ratio Pr/PO between the surface pressure Pr and the surface pressure P0 is equal to or greater than 1.00, in other words, to manufacture the seismic base isolation support apparatus 1 in which the ratio Pr/PO between the surface pressure Pr and the surface pressure P0 is equal to or greater than 1.00, a load cell (pressure sensor) is interposed between the upper flange plate 43 and a temporary upper shear key which corresponds to the upper shear key 45 and is thinner than the upper shear key 45 fittingly secured in the recess 41 and the recess 23, a lead wire from the load cell is led out from a fine hole formed in the upper flange plate 43, and an electrical signal from the lead wire thus led out is measured in a state in which the estimated load W to be supported by this seismic base isolation support apparatus 1 is applied to the upper plate 10. The surface pressure Pr is detected from this measured electrical signal, and the detected ratio Pr/PO is determined from the detected surface pressure Pr and the surface pressure P0, and if the ratio Pr/PO is equal to or greater than 1.00, the application of the load W to the upper plate 10 is released, the upper flange plate 43 is removed, the temporary upper shear key is replaced by the upper shear key 45, and the upper flange plate 43 is fixed again to the uppermost rigid layer 3 by means of the bolts 49. Meanwhile, if the ratio Pr/PO is less than 1.00, the application of the estimated load W to be supported by this seismic base isolation support apparatus 1 is released from the upper plate 10, the upper flange plate 43 and the temporary upper shear key are removed, and additional lead is press-fitted into the hollow portion 14. The press-fitting of the additional lead into the hollow portion 14 is effected by pressing the additional lead into the upper portion of the hollow portion 14 by means of a hydraulic ram or the like. After the press-fitting of the additional lead into the hollow portion 14, the upper flange plate 43, the temporary shear key, and the load cell (pressure sensor) between the upper flange plate 43 and the temporary shear key are fixed to the uppermost rigid layer 3 by means of the bolts 49. The ratio Pr/PO is then determined from the surface pressure Pr based on the electrical signal from the load cell and the surface pressure P0, and if the ratio Pr/PO is equal to or greater than 1.00, the upper shear key 45 instead of the temporary upper shear key and the upper flange plate 43 are fixed to the uppermost rigid layer 3 by means of the bolts 49 in the same way as described above. On the other hand, if the ratio Pr/PO is less than 1.00, the above-described press-fitting of the additional lead into the hollow portion 14 is repeated until the ratio Pr/PO reaches 1.00 or greater.

It should be noted that if the ratio Pr/PO becomes 1.00 or greater, the inner peripheral surfaces 15 of the elastic layers 2 may not deform into the concave surfaces 81 under no load (W = 0).

With the seismic base isolation support apparatus 1 thus manufactured, since the ratio Pr/PO between the surface pressure Pr and the surface pressure P0 is 1.00 or greater and the ratio Vp/Ve between the volume Vp and the volumetric capacity Ve is 1.02 or greater, as compared with not only the case where the vibration damping body is disposed in the hollow portion such that the ratio Pr/PO becomes smaller than 1.00 (ratio Pr/PO < 1.00) and the ratio Vp/Ve becomes smaller than 1.02 (Vp/Ve < 1.02) but also the case where the lead plug 17 is disposed in the hollow portion 14 such that the ratio Pr/PO becomes smaller than 1.00, while the ratio Vp/Ve becomes equal to or greater than 1.02, or such that the ratio Vp/Ve becomes smaller than 1.02, while the ratio Pr/PO becomes equal to or greater than 1.00, it is possible to allow the lead plug 17 disposed in the hollow portion 14 to be restrained by the elastic layers 2, the rigid layers 3, the upper plate 10, and the lower plate 11 with lesser clearances, with the result that it is possible to obtain more stable seismic isolation characteristics, avoid the fatigue and fracture of the elastic layers 2 and the lead plug 17, and obtain particularly excellent durability, seismic isolation effect, and manufacturability.

### Seismic Base Isolation Support Apparatuses 1 of Examples 1, 2, and 3

Elastic layers 2: 20 annular rubber plates were used which were formed of natural rubber and had a thickness t1 = 2.5 mm, a diameter (outside diameter) of the outer peripheral surface 4 = 250 mm, a diameter (inside diameter) of the cylindrical inner peripheral surface 15 before deformation = 50 mm, and a shear modulus of elasticity = G4.

The uppermost and lowermost rigid layers 3: Steel plates were used which each had a thickness t2 = 20 mm, a diameter (outside diameter) of the outer peripheral surface 5 = 250 mm, and a diameter (inside diameter) of the inner peripheral surface 16 = 50 mm.

### Depth of each of the recesses 23 and 28 = 10 mm

The rigid layers 3 between the uppermost and lowermost rigid layers 3: 19 steel plates were used which each had a thickness t3 = 1.6 mm, a diameter (outside diameter) of the outer peripheral surface 5 = 250 mm, and a diameter (inside diameter) of the inner peripheral surface 16 = 50 mm.

### The thickness of the coating layer 6 = 5 mm

Lead plug 17: in the seismic base isolation support apparatuses 1, the lead plug 17 was formed by respectively filling lead into the hollow portion 14 such that, with respect to the supported load W of 801 kN, the ratio Pr/P0 = 1.78 and the ratio Vp/Ve = 1.03 in Example 1, the ratio Pr/P0 = 2.03 and the ratio Vp/Ve = 1.04 in Example 2, and the ratio Pr/P0 = 2.40 and the ratio Vp/Ve = 1.06 in Example 3.

### Seismic Base Isolation Support Apparatus of Comparative Examples 1 and 2

Seismic base isolation support apparatuses similar to those of Examples were manufactured except that the lead plug 17 was formed by respectively filling lead into the hollow portion 14 such that, with respect to the supported load W of 801 kN, the ratio Pr/P0 = 0.55 and the ratio Vp/Ve = 0.98 in Comparative Example 1, and the ratio Pr/P0 = 1.04 and the ratio Vp/Ve = 1.00 in Comparative Example 2.

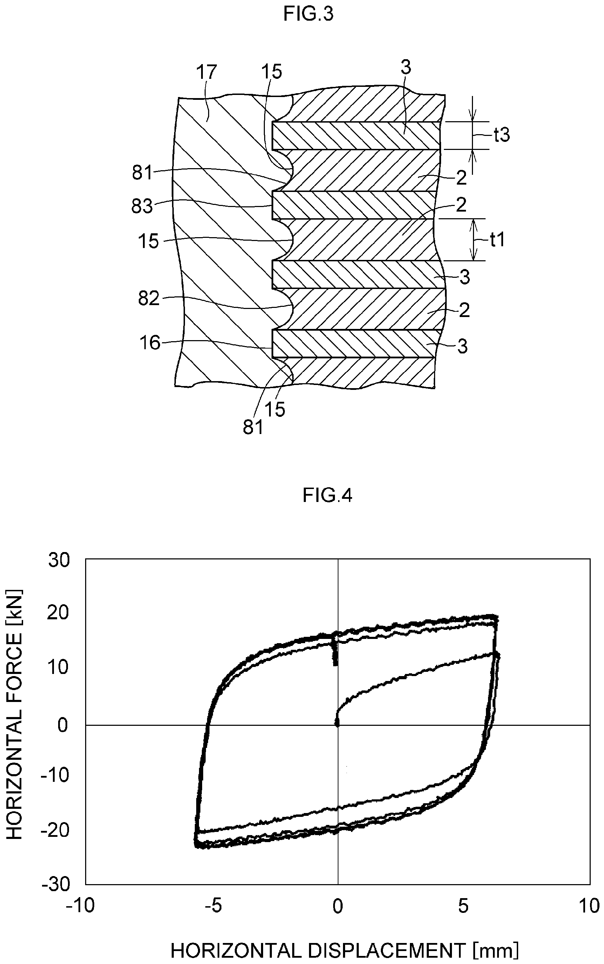

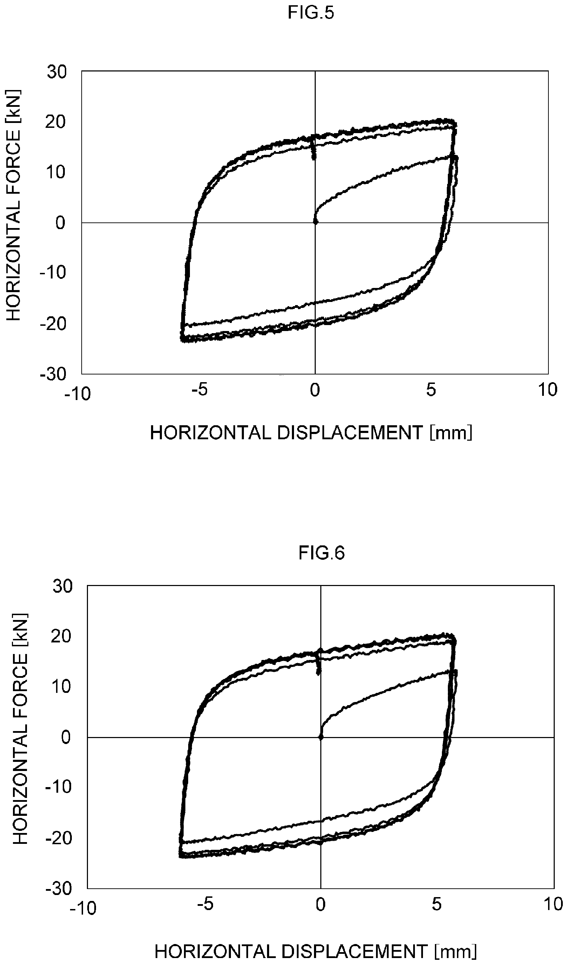

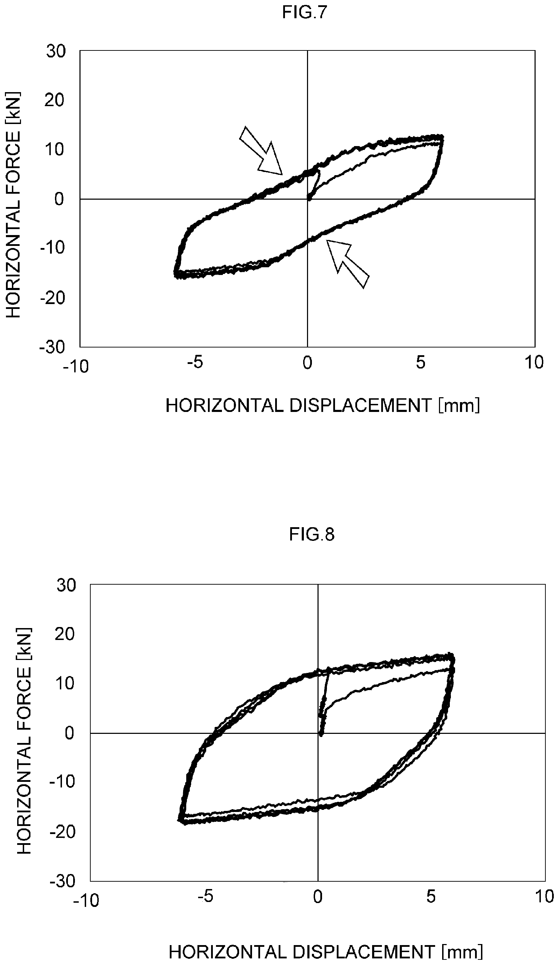

Measurement was made of hysteresis characteristics between horizontal displacement and horizontal force (horizontal stress) in a case where vibration (excitation frequency f = 0.5 Hz, excitation period T = 1/f = 2 sec) was applied in the horizontal direction H to the lower plate 11 with respect to the upper plate 10 with a maximum horizontal displacement (shear strain of 10%) of ± 5 mm in a state in which the load W = 801 kN was applied to the upper plate 10 of each of the seismic base isolation support apparatuses 1 of Examples 1, 2, and 3 and the seismic base isolation support apparatuses of Comparative Examples 1 and 2. The results of the measurement are shown in Fig. 4 as for Example 1, in Fig. 5 as for Example 2, in Fig. 6 as for Example 3, in Fig. 7 as for Comparative Example 1, and in Fig. 8 as for Comparative Example 2, respectively. As is apparent from the hysteresis characteristics shown in Figs. 4 to 6, the seismic base isolation support apparatuses 1 of Examples 1, 2, and 3 make it possible to obtain stable seismic isolation characteristics, have a trigger function, and are capable of satisfactorily coping with an earthquake of a large amplitude. It can be seen that, with the seismic base isolation support apparatus of Comparative Example 1, dents were noted as indicated by arrows in Fig. 7 and unstable seismic isolation characteristics were obtained, making it impossible to satisfactorily obtain the trigger function, and with the seismic base isolation support apparatus of Comparative Example 2 as well, characteristics equivalent to those of the seismic base isolation support apparatus of Comparative Example 1 were exhibited, as shown in Fig. 8. It should be noted that it became clear that if the ratio Pr/PO is not greater than 5.90, or the ratio Vp/Ve is not greater than 1.07, the press-fitting of the lead into the hollow portion 14 is facilitated in the manufacture and does not involve much difficulty. In addition, although an attempt was made to press-fit the lead into the hollow portion 14 such that the ratio Pr/PO exceeded 5.90 or the ratio Vp/Ve became equal to or greater than 1.12, it became clear that it is difficult to do so without accompanying the destruction of the inner peripheral surfaces 15 of the elastic layers 2.

### DESCRIPTION OF REFERENCE NUMERALS

- 1:: seismic base isolation support apparatus
- 2:: elastic layer
- 3:: rigid layer
- 4, 5:: outer peripheral surface
- 6:: coating layer
- 7:: laminated body
- 8:: upper end face
- 9:: lower end face
- 10:: upper plate
- 11:: lower plate
- 12:: lower surface
- 13:: upper surface
- 14:: hollow portion
- 15:: inner peripheral surface
- 16:: inner peripheral surface
- 17:: lead plug

## Claims

1. A seismic base isolation support apparatus comprising:
a laminated body having alternately laminated elastic layers and rigid layers;
an upper plate and a lower plate which are respectively mounted on an upper end face and a lower end face of said laminated body; and
a vibration damping body which is disposed in a hollow portion surrounded by the elastic layers and the rigid layers as well as said upper plate and said lower plate and extending in a laminated direction from a lower surface of said upper plate to an upper surface of said lower plate,
said laminated body and said vibration damping body being adapted to support a load applied in the laminated direction to said upper plate,
wherein said vibration damping body is disposed in the hollow portion such that a ratio Pr/PO between surface pressure Pr from said vibration damping body to said upper plate on the basis of the load in the laminated direction to be supported and surface pressure P0 at a pressure receiving surface of said laminated body with respect to the load on the basis of that load becomes equal to or greater than 1.00 (ratio Pr/P0 ≥ 1.00), and such that a ratio Vp/Ve between a volume Vp of said vibration damping body disposed in the hollow portion and a volumetric capacity Ve of the hollow portion in a state in which said vibration damping body is not yet disposed therein and the load in the laminated direction is applied to said laminated body becomes equal to or greater than 1.02 (ratio Vp/Ve ≥ 1.02).

2. A seismic base isolation support apparatus comprising:
a laminated body having alternately laminated elastic layers and rigid layers;
an upper plate and a lower plate which are respectively mounted on an upper end face and a lower end face of said laminated body; and
a vibration damping body which is disposed in a hollow portion surrounded by the elastic layers and the rigid layers as well as said upper plate and said lower plate and extending in a laminated direction from a lower surface of said upper plate to an upper surface of said lower plate, said vibration damping body being disposed without a clearance with respect to the elastic layers and the rigid layers as well as said upper plate and said lower plate,
said laminated body and said vibration damping body being adapted to support a load applied in the laminated direction to said upper plate,
wherein said vibration damping body is disposed in the hollow portion such that a ratio Pr/PO between surface pressure Pr from said vibration damping body to said upper plate on the basis of the load in the laminated direction to be supported and surface pressure P0 at a pressure receiving surface of said laminated body with respect to the load on the basis of that load becomes equal to or greater than 1.00 (ratio Pr/P0 ≥ 1.00), and such that a ratio Vp/Ve between a volume Vp of said vibration damping body disposed in the hollow portion and a volumetric capacity Ve of the hollow portion in a state in which said vibration damping body is not yet disposed therein and the load in the laminated direction is applied to said laminated body becomes equal to or greater than 1.02 (ratio Vp/Ve ≥ 1.02).

3. A seismic base isolation support apparatus comprising:
a laminated body having alternately laminated elastic layers and rigid layers;
an upper plate and a lower plate which are respectively mounted on an upper end face and a lower end face of said laminated body; and
a vibration damping body which is disposed in a hollow portion surrounded by the elastic layers and the rigid layers as well as said upper plate and said lower plate and extending in a laminated direction from a lower surface of said upper plate to an upper surface of said lower plate,
said laminated body and said vibration damping body being adapted to support a load applied in the laminated direction to said upper plate,
the vibration of said upper plate with respect to said lower plate in a direction perpendicular to the laminated direction being attenuated through the plastic deformation of said vibration damping body, the transmission of the vibration of said lower plate to said upper plate in the direction perpendicular to the laminated direction being suppressed through the shear elastic deformation of said laminated body,
wherein said vibration damping body is disposed in the hollow portion such that a ratio Pr/PO between surface pressure Pr from said vibration damping body to said upper plate on the basis of the load in the laminated direction to be supported and surface pressure P0 at a pressure receiving surface of said laminated body with respect to the load on the basis of that load becomes equal to or greater than 1.00 (ratio Pr/P0 ≥ 1.00), and such that a ratio Vp/Ve between a volume Vp of said vibration damping body disposed in the hollow portion and a volumetric capacity Ve of the hollow portion in a state in which said vibration damping body is not yet disposed therein and the load in the laminated direction is applied to said laminated body becomes equal to or greater than 1.02 (ratio Vp/Ve ≥ 1.02).

4. A seismic base isolation support apparatus comprising:
a laminated body having alternately laminated elastic layers and rigid layers;
an upper plate and a lower plate which are respectively mounted on an upper end face and a lower end face of said laminated body; and
a vibration damping body which is disposed in a hollow portion surrounded by the elastic layers and the rigid layers as well as said upper plate and said lower plate and extending in a laminated direction from a lower surface of said upper plate to an upper surface of said lower plate, said vibration damping body being disposed without a clearance with respect to the elastic layers and the rigid layers as well as said upper plate and said lower plate,
said laminated body and said vibration damping body being adapted to support a load applied in the laminated direction to said upper plate,
the vibration of said upper plate with respect to said lower plate in a direction perpendicular to the laminated direction being attenuated through the plastic deformation of said vibration damping body, the transmission of the vibration of said lower plate to said upper plate in the direction perpendicular to the laminated direction being suppressed through the shear elastic deformation of said laminated body,
wherein said vibration damping body is disposed in the hollow portion such that a ratio Pr/PO between surface pressure Pr from said vibration damping body to said upper plate on the basis of the load in the laminated direction to be supported and surface pressure P0 at a pressure receiving surface of said laminated body with respect to the load on the basis of that load becomes equal to or greater than 1.00 (ratio Pr/P0 ≥ 1.00), and such that a ratio Vp/Ve between a volume Vp of said vibration damping body disposed in the hollow portion and a volumetric capacity Ve of the hollow portion in a state in which said vibration damping body is not yet disposed therein and the load in the laminated direction is applied to said laminated body becomes equal to or greater than 1.02 (ratio Vp/Ve ≥ 1.02).

5. The seismic base isolation support apparatus according to any one of claims 1 to 4, wherein said vibration damping body is disposed in the hollow portion such that the ratio Pr/P0 exceeds 1.00 (ratio Pr/PO > 1.00) or becomes equal to or greater than 1.09 (ratio Pr/P0 ≥ 1.09), equal to or greater than 2.02 (ratio Pr/P0 ≥ 2.02), or equal to or greater than 2.50 (ratio Pr/P0 ≥ 2.50).

6. The seismic base isolation support apparatus according to any one of claims 1 to 5, wherein said vibration damping body is disposed in the hollow portion such that the ratio Pr/P0 becomes equal to or less than 5.90 (ratio Pr/P0 ≤ 5.90).

7. The seismic base isolation support apparatus according to any one of claims 1 to 6, wherein said vibration damping body is disposed in the hollow portion such that the ratio Vp/Ve becomes equal to or less than 1.07 (ratio Vp/Ve ≤ 1.07).

8. The seismic base isolation support apparatus according to any one of claims 1 to 7, wherein said vibration damping body is formed of a damping material which absorbs vibrational energy through plastic deformation.

9. The seismic base isolation support apparatus according to claim 8, wherein the damping material is constituted of lead, tin, or a non-lead-based low melting point alloy.

10. The seismic base isolation support apparatus according to any one of claims 1 to 9, wherein an inner peripheral surface of said laminated body defining the hollow portion is formed into concave surfaces at positions of the elastic layers as said vibration damping body bites into the elastic layers.

11. The seismic base isolation support apparatus according to any one of claims 1 to 10, wherein the inner peripheral surface of said laminated body defining the hollow portion is formed into convex surfaces at positions of the rigid layers as said vibration damping body bites into the elastic layers.

12. The seismic base isolation support apparatus according to any one of claims 1 to 11, wherein an uppermost one of the rigid layers in the laminated direction has a first recess which is open at an upper surface thereof and which has a diameter greater than a diameter of an upper portion of the hollow portion and communicates with the upper portion of the hollow portion, and said upper plate includes an upper flange plate having in a lower surface thereof a second recess having a diameter identical to the diameter of the first recess and opposing the first recess in the laminated direction and an upper shear key which is fittingly secured to the upper flange plate in the second recess and is fittingly secured to the uppermost rigid layer in the first recess, an outer peripheral surface of an upper end portion of said vibration damping body being in contact, without a clearance, with an inner peripheral surface of the uppermost rigid layer defining the upper portion of the hollow portion.

13. The seismic base isolation support apparatus according to any one of claims 1 to 12, wherein a lowermost one of the rigid layers in the laminated direction has a third recess which is open at a lower surface thereof and which has a diameter greater than a diameter of a lower portion of the hollow portion and communicates with the lower portion of the hollow portion, and said lower plate includes a lower flange plate having in an upper surface thereof a fourth recess having a diameter identical to the diameter of the third recess and opposing the third recess in the laminated direction and a lower shear key which is fittingly secured to the lower flange plate in the fourth recess and is fittingly secured to the lowermost rigid layer in the third recess, an outer peripheral surface of a lower end portion of said vibration damping body being in contact, without a clearance, with an inner peripheral surface of the lowermost rigid layer defining the lower portion of the hollow portion.

14. The seismic base isolation support apparatus according to any one of claims 1 to 14, wherein the rigid layers include a pair of thick-walled rigid plates respectively disposed at respective end face sides of said laminated body, and one end portion of said vibration damping body is densely disposed in one end portion of the hollow portion defined by an inner peripheral surface of one of the thick-walled rigid plates, while another end portion of said vibration damping body is densely disposed in another end portion of the hollow portion defined by an inner peripheral surface of another one of the thick-walled rigid plates.
